Europäisches Patentamt

European Patent Office

Office européen des brevets

(19)

(11) Numéro de publication: **0 231 669**
**B1**

(12) **FASCICULE DE BREVET EUROPEEN**

(45) Date de publication du fascicule du brevet:
**18.10.89**

(51) Int. Cl.⁴: **G01G 19/02**, G01L 5/00

(21) Numéro de dépôt: **86400172.2**

(22) Date de dépôt: **29.01.86**

(54) Procédé de mesure des charges dynamiques appliquées à une chaussée par le trafic routier.

(43) Date de publication de la demande:
**12.08.87 Bulletin 87/33**

(45) Mention de la délivrance du brevet:
**18.10.89 Bulletin 89/42**

(84) Etats contractants désignés:
**AT BE CH DE GB IT LI LU NL SE**

(56) Documents cités:
DE-A- 2 311 928
FR-A- 2 482 340
US-A- 3 656 059

**MEASUREMENT AND CONTROL,**
vol. 2, no. 12, décembre 1969, pages
T214-T222, Londres, GB; A.C. FERGUSON: "Weighing
vehicles in motion"
**ELECTRONIQUE INDUSTRIELLE,**
no. 30, mars 1982, pages 73-75, Paris, FR; P. COVILLE:
"Câbles piézo-électriques: de nombreuses possibilités
en mesure"

(73) Titulaire: **ETAT FRANCAIS représenté par Le Ministère
de l'Urbanisme et du Logement LABORATOIRE
CENTRAL DES PONTS ET CHAUSSEES, 58 boulevard
Lefebvre, F-75732 Paris Cedex 15(FR)**

(72) Inventeur: **Siffert, Marcel, 5, route de Gambais,
F-78550 Bazainville(FR)**
Inventeur: **Briant, Gervais M.A., 1, rue du Pont Forget,
F-78610 le Perret en Yvelines(FR)**
Inventeur: **Feunten, Pierre M., 16, rue de Montmorency,
F-78310 Elancourt(FR)**
Inventeur: **Goacolou, Honoré, 11, avenue Lafayette,
F-78340 Les Clayes sous Bois(FR)**
Inventeur: **Petitgrand, Jean-Claude, 3 Bis, rue de
L'Eglise, F-78660 Prunay sous Ablis(FR)**
Inventeur: **Peyret, François, 64, rue Chevrière
Bouchemaine, F-49000 Angers(FR)**

(74) Mandataire: **Levesque, Denys et al, Cabinet Beau de
Loménie 55, rue d'Amsterdam, F-75008 Paris(FR)**

## Description

La présente invention se rapporte à un procédé de mesure des charges dynamiques appliquées à une chaussée par le trafic routier.

On sait que la connaissance des charges appliquées aux chaussées et au ouvrages d'art (spectres de charges, taux de surcharges, agressivité des essieux des véhicules lourds) est nécessaire pour un dimensionnement correct et ces ouvrages et puor leur entretien.

On utilise actuellement des procédés de pesage dynamique sur chaussées mettant en oeuvre des bascules dynamiques à quartz piézo-électrique, à jauges de contrainte, à effet capacitif, etc. Ces matériels sont coûteux, nécessitent d'importants travaux d'installation et d'entretien, sont lourds à mettre en oeuvre et imposent des durées relativement longues de fermeture de chaussée à la circulation lors de ces travaux. C'est pourquoi ils ne connaissent pas une large diffusion.

Le procédé selon l'invention a pour but de remédier à ces inconvénients. Conformómont à la revendication 1, ce procédé consiste essentiellement à placer en travers de la chaussée un premier câble piézo-électrique rectiligne de façon que les roues des essieux des véhicules circulant sur la chaussée le soumettent, lors de leur passage, à une pression à laquelle il répond par l'émission d'une impulsion électrique, et à calculer la charge dynamique correspondante à partir des parmètres de ladite impulsion.

D'une manière très simple, mais n'offrant qu'une précision assez grossière, on peut déduire la charge dynamique de l'amplitude de l'impulsion délivrée par le premier câble. Mais on obtient des résultats de meilleurs qualité en déduisant la charge dynamique de l'aire du contour de l'impulsion, rapporté au temps, et de la vitesse du véhicule, en effectuant le produit de ladite aire par ladite vitesse. La valeur de l'aire en cause est en effet proportionelle à la charge dynamique et inversement proportionnelle à la vitesse du véhicule. Cette dernière peut être mesurée à l'aide de l'impulsion délivrée par un second câble piézo-électrique rectiligne disposé sur la chaussée à une certaine distance du câble précité, par détermination de la durée de l'intervalle de temps séparant l'apparition des impulsions respectivement fournies par les deux câbles pour une même roue. Il convient donc que la distance des câbles soit inférieure à la distance des essieux successifs de tout véhicules circulant sur la chaussée.

Les câbles peuvent faire entre eux un angle non nul (par exemple 34 à 40°), ou être disposés parallèlement l'un à l'autre. Dans le premier cas, l'un au moins des câbles est placé en biais sur la chaussée et il est possible d'effectuer un pesage roue par roue et d'en déduire la localisation latérale du véhicule sur la chaussée à partir de la connaissance de la vitesse et de la différence des temps de passage des roues gauche et droite du véhicule sur la paire de câbles.

D'une manière générale, il convient que l'un au moins des câbles soit disposé perpendiculairement à la direction longitudinale de la chaussée.

L'instant d'apparition de chaque impulsion peut être défini comme étant l'instant où le signal obtenu par dérivation de l'impulsion quitte la valeur zéro. Quant à l'aire de l'impulsion, elle peut être mesurée par intégration par rapport au temps du signal constituant l'impulsion entre l'instant de son apparition et l'instant de sa fin où ce signal reprend la valeur qu'il avait à l'instant d'apparition. Lorsque la valeur du signal constituant l'impulsion à l'instant de son apparition est différente de zéro, ainsi que cela peut résulter de la flexion de la chaussée au passage de l'essieu, il convient que l'intégration porte sur la différence entre ce signal et un signal créé avec une valeur contante égale à ladite valeur non nulle.

D'autre part, la durée de l'intervalle de temps séparant l'apparition des impulsions correspondant à une même roue peut être mesurée par création d'un signal en forme de rampe commençant à l'instant d'apparition de l'impulsion émise par le câble sur lequel passe d'abord la roue et finissant à l'instant d'apparition de l'impulsion émise par l'autre câble. En général, ce dernier sera le premier câble délivrant l'information de poids, le câble nommé en premier lieu étant le second câble délivrant l'information de vitesse.

De préférence, l'unique câble ou au moins le premier câble est installé de façon à être insensible aux effets des flexions longitudinales de la chaussée. Par ailleurs, ledit câble est avantageusement noyé dans un matériau à module d'élasticité très peu sensible à la température, remplissant un long support rigide sous-jacent au câble. Un tel pré-conditionnement du câble assure une indépendance des résultants de mesure vis-à-vis des variations de température et diminue les effets des flexions transversales de la chaussée. De plus, il réduit l'hétérogénéité transversale de la réponse du câble piézo-électrique au passage de la charge, par rapport à celle qui présenterait le câble nu.

Ledit support de câble peut être un profilé en U dont les ailes, tournées vers le haut, sont flanquées de bandes de matériau à très faible module d'élasticité, le tout étant noyé à l'intérieur d'une saignée pratiquée transversalement dans la couche de surface de la chaussée et remplie d'un matériau à module d'élasticité très peu sensible à la température. On réalise ainsi un "capteur de saignée".

On peut aussi donner au support de câble la conformation d'un long boîtier plat, lequel est placé transversalement sur la couche de surface de la chaussée et fixé à celle-ci.

Dans tous les cas le câble qui délivre l'information de poids doit être agencé de façon qu'il ne reçoive essentiellement que les efforts verticaux traduisant la charge au passage d'un essieu, et ne subisse que le moins possible l'influence des efforts horizontaux.

Le procédé selon l'invention permet d'effectuer des mesures pondérales moyennant des dépenses très inférieures à celles qu'entraîne l'usage de bascules, la matériel mis en oeuvre étant peut coûteux et ne demandant aucun entretien. En cas de travaux sur la chaussée, il n'est pas toujours nécessaire d'enlever et de réinstaller ce matériel; si par exemple un tapis mince est appliqué par la suite, il peut s'avérer suffisant de modifier le gain des amplificateurs qui traitent les impulsions délivrées par les câbles et de procéder à un nouvel étalonnage pour obtenir un fonctionnement satisfaisant.

On peut prévoir, dans le cadre de l'invention, de mettre en oeuvre non pas une seule paire de câbles (un premier câble et un second câble) mais plusieurs paires en associant à un même second câble plusieurs premiers câbles, et en faisant la moyenne des mesures fournies par ces différentes paires de câbles.

D'autres caractéristiques et avantages de l'invention ressortiront plus clairement de la description qui va suivre, en regard des dessins annexés, d'exemples de réalisation non limitatifs.

La figure 1 illustre schématiquement un mode de mise en oeuvre de procédé selon l'invention à l'aide de deux câbles piézo-électriques de mesure et d'un circuit de traitement des signaux fournis par ceux-ci.

La figure 2 est un diagramme des différents signaux apparaissant dans le circuit de la figure 1.

Les figures 3 et 4 représentent, en coupe, deux exemples de réalisation de capteurs incorporant un câble piézo-électrique de mesure.

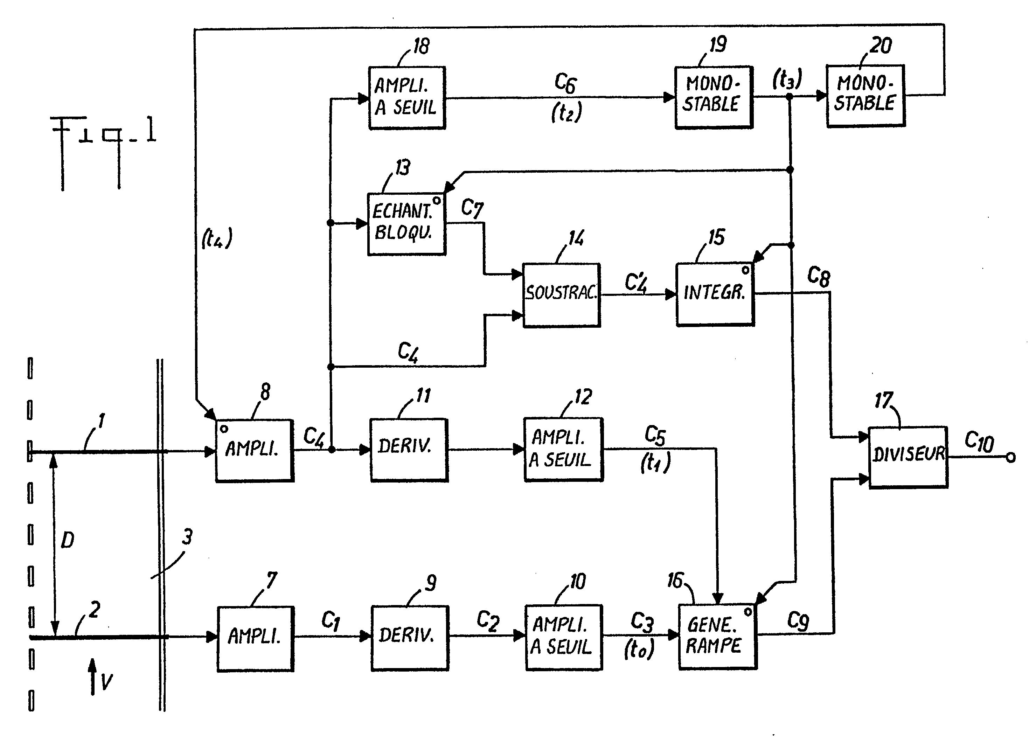

Comme le montre la figure 1, deux câbles piézo-électriques 1, 2 sont disposés parallèlement en travers de l'une des voies de circulation d'une chaussée 3, avec un écartement D de l'ordre de 60 cm, perpendiculairement à la direction longitudinale de la chaussée.

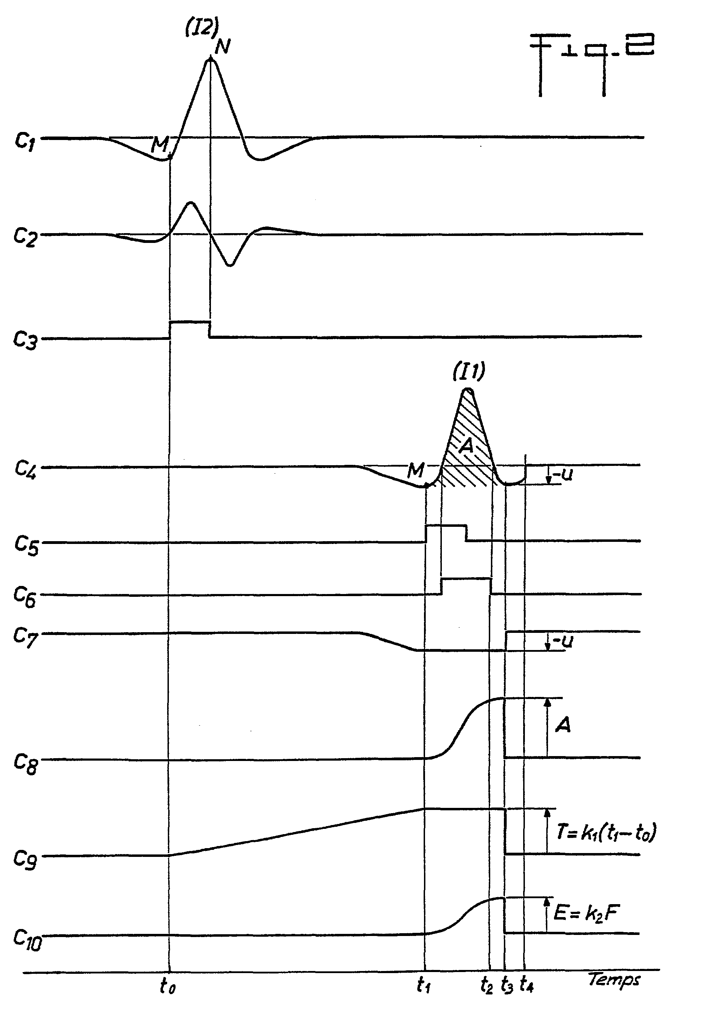

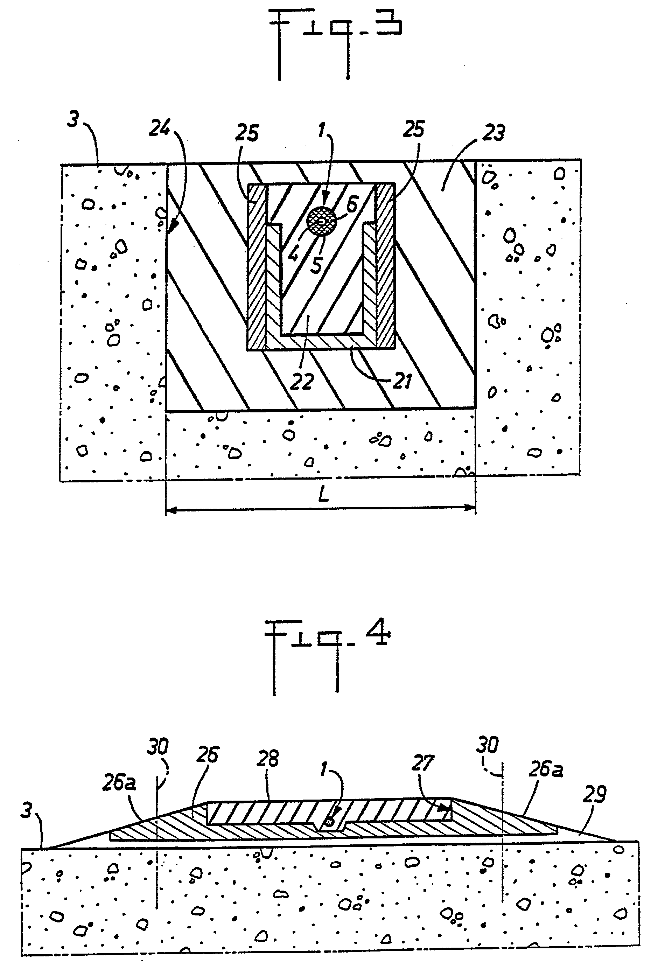

Chacun de ces câbles, par exemple du type de celui qui fait l'objet du brevet français No 70 / 36 004 (2 109 176), est un câble coaxial composé (figure 3) d'une âme 4 et d'une gaine 5, toutes deux métalliques, l'espace intermédiaire étant rempli d'un matériau piézo-électrique 6 sous forme de poudre.

Lorsqu'un essieu de véhicule passe sur l'un de ces câbles 1, 2, ce câble subit une compression et délivre une impulsion (cf. courbes C1 et C4 de la figure 2) dont les caractéristiques dépendent de la force de compression et de la vitesse du véhicule, donc de la charge dynamique exercée par l'essieu sur la chaussée.

Le premier câble 1 délivre ainsi, au passage d'un essieu de véhicule, une impulsion I1 destinée à fournir une information relative au poids. Le second câble, placé en amont du câble 1 suivant le sens de circulation indiqué par la flèche V, délivre de même une impulsion I2 destinée à fournir une information relative à la vitesse de l'essieu.

Ces impulsions, dont la partie essentielle correspond à une tension électrique positive, sont encadrées de deux zones de tension négative, dues aux contraintes de traction exercées par l'essieu sur la couche de surface de la chaussée. L'instant où commence véritablement chaque impulsion est celui du point M où la tension devenue négative commence à croître jusqu'au sommet N de l'impulsion. Cet instant est déterminé comme étant celui où le signal obtenu par dérivation de l'impulsion quitte la valeur zéro ou, plus exactement, franchit cette valeur après avoir été légèrement négatif (cf courbe C2 de la figure 2).

Les câbles 1, 2 sont reliés à des amplificateurs 7, 8 présentant une haute impédance d'entrée afin de permettre des mesures correctes même pour des véhicules circulant à faible vitesse. Ces amplificateurs délivrant les signaux C1 et C4 correspondant respectivement aux impulsions I2 et I1. L'amplificateur 7 du câble 2 est suivi d'un dérivateur 9 délivrant le signal C2, lequel est appliqué à un amplificateur à seuil 10. La valeur du seuil étant voisine de zéro, ce dernier amplificateur délivre une impulsion C3 en forme de créneau dont le front avant correspond à l'instant to d'apparition de l'impulsion C1.

De même, l'amplificateur 8 auquel est raccordé le câble 1 est suivi d'un dérivateur 11 et d'un amplificateur à seuil 12 qui délivre le créneau C5 dont le front avant correspond à l'instant tl d'apparition de l'impulsion C4, postérieur à l'instant to, car le câble 1 se trouve en aval du câble 2 suivant le sens de la circulation indiqué par la flèche V.

L'aire A de l'impulsion C4 (couverte de hachures sur la figure 2) est proportionnelle à la force F exercée par l'essieu sur le câble 1 (charge dynamique de l'essieu) inversement proportionnelle à la vitesse V dudit essieu :

$$A = k\, F / V.$$

Donc :

$$F = k'\, AV.$$

Or

$$V = D / (tl - to).$$

D'où

$$F = K''\, A / (tl - to).$$

Conformément à cette dernière formule, le calcul de F va être effectué à partir des valeurs de l'aire A et du temps tl - to, qu'il s'agit donc de déterminer.

Etant donné que le début et la fin de l'impulsion C4 correspondant à un niveau négatif -u de tension, on forme un signal de correction C7 qui présente un palier de tension -u pendant toute la durée de l'impulsion, puis on retranche ce signal du signal C4. L'impulsion entièrement positive qui en résulte peut alors être aisément intégrée par rapport au temps pour obtenir l'aire A.

Le signal C7 est engendré par un échantillonneur-bloqueur 13 qui reçoit le signal C4 et assure la charge d'un condensateur à la valeur progressivement décroissante que prend le signal C4 avant l'impulsion proprement dite, ce condensateur conservant ensuite la tension -u finalement acquise. Ce signal C7 est retranché du signal C4 dans un élément de circuit 14 et le signal C'4 résultant (non représenté sur la figure 2) est appliqué à un intégrateur 15 qui délivre un signal C8 dont l'amplitude terminale est représentative de l'aire A.

La détermination de l'intervalle de temps tl - to se fait en appliquant les signaux C3 et C5 à un générateur de rampe 16 de façon que celui-ci engendre un signal C9 en forme de rampe, croissant linéairement de l'instant to à l'instant tl pour demeurer ensuite constant à la valeur T atteinte à l'instant tl, laquelle est proportionnelle à la valeur de l'intervalle de temps tl - to :

$$T = kl\, (tl - to).$$

Finalement, les signaux C8 et C9, représentant respectivement l'aire A et le temps tl - to, sont appliqués à un circuit diviseur 17 qui en effectue le quotient et fournit en conséquence un signal C10 dont la valeur terminale E est proportionelle à la charge dynamique F qu'il s'agissait de déterminer.

Le circuit de la figure 1 comporte encore un amplificateur à seuil 18 qui fournit, à partir de l'impulsion constituant le signal C4, une impulsion rectangulaire C6 commençant et finissant aux instants où l'impulsion C4 passe par le niveau zéro. A partir de l'instant terminal t2 de l'impulsion C6, un premier monostable 19 est déclenché, qui crée un instant t3 où est formée une impulsion courte de remise à zéro des signaux C7, C8 et C9, ainsi que, par conséquent, du signal C10. L'intervalle de temps t3 - t2 est donc celui pendant lequel se fait la mesure de l'amplitude E du signal C10. Sa durée résulte d'un compris : il doit être suffisamment long pour permettre une mesure confortable de ladite amplitude E, sans se prolonger au point qu'il y ait risque d'empiétement d'un cycle de mesure relatif à un essieu d'un véhicule et du cycle de mesure relatif à un autre essieu du même véhicule, circulant à vitesse élevée. Un ordre de grandeur convenable pour cet intervalle de temps est 1/30 de seconde.

Après l'instant t3 est créé par un second monostable 20 un instant t4, les intervalles de temps t4 - t3 et t3 - t2 étant sensiblement égaux. A cet instant t4 est formée une courte impulsion qui assure la décharge du câble 1, ce qui se manifeste par le retour à zéro du signal C4. Pareille opération est inutile pour le câble 2, qui n'a à fournir qu'une information par "tout ou rien" permettant de déterminer la vitesse de déplacement des véhicules. L'instant t4 marque la fin du processus de mesure de la charge dynamique d'un essieu.

Deux modes d'installation du câble 1 sont illustrés à titre d'exemples par les figures 3 et 4. D'une manière générale, ce câble doit être mis à l'abri des effets des flexions longitudinales et transversales et des variations de température dont peut être le siège le chaussée 3. Pour sa part, le câble 2, fournissant une simple information de vitesse, peut être implanté plus simplement.

Suivant la figure 3, le câble 1 est associé à un profilé rigide 21, rectiligne et de section en U, qu'il surmonte longitudinalement et auquel il est lié par un matériau d'enrobage 22 à module d'élasticité très peu sensible à la température. Le profilé en U 21, qui présente une section de contour général sensiblement carré, peut être réalisé en un métal tel que l'aluminium. On obtient ainsi un ensemble de conditionnement rigide du câble 1. Cet ensemble est nové dans un matériau 23, qui peut être de même nature que le matériau 22, remplissant une saignée 24 pratiquée transversalement dans la couche de surface de la chaussée 3. Cette saignée présente une largeur L comprise par exemple entre 5 et 8 cm, suffisante pour rendre négligeable l'incidence des variations éventuelles du module d'élasticité du matériau constituant la couche de surface. Le long des flancs extérieurs des ailes du profilé 21, tournées vers le haut, et de la masse de matériau 22 qui en fait saillie sont prévues des bandes 25 de matériau à très faible module d'élasticité (par exemple en mousse d'élastomère) qui procurent un effet de filtrage mécanique atténuant l'influence des flexions longitudinales de la chaussée, celle des flexions transversales étant contenue par le profilé rigide 21. Les matériaux de remplissage 22, 23 peuvent être constitués par un mortier époxydique à charge de silice, dont le module d'élasticité ne varie pas de plus de 20 à 25 % dans la plage de température allant de - 10°C à + 50°C.

L'assemblage des éléments 1, 21, 22 et 25 peut être réalisé en usine. Dans l'ensemble obtenu, le câble 1 est à une cote constante bien déterminée par rapport au profilé 21, et la rigidité de cet ensemble permet son installation en saignée de façon aisée et reproductible.

Au lieu d'utiliser un capteur de saignée tel que représenté à la figure 3, on peut parfois préférer un capteur de surface. La figure 4 représente un tel mode de réalisation. Un boîtier plat 26, de hauteur inférieure à 1 cm environ et de largeur pouvant atteindre 15 cm environ, sert de support au câble 1, lequel est placé au centre d'une large gorge 27 que comporte le boîtier sur toute sa longueur. La gorge 27 est complètement remplie d'un matériau d'enrobage 28 du même genre que les matériaux 22 et 23 du capteur de saignée de la figure 3. Le boîtier 26, qui comporte sur ses deux bords longitudinaux des biseaux formant des rampes d'accès 26a destinées à atténuer la secousse infligée par le capteur aux véhicules, est fixée à la surface de la chaussée 3, transversalement à la direction longitudinale de celle-ci, par collage à l'aide d'une matière adhésive 29, ainsi qu'éventuellement par des moyens de fixation complémentaire 30 (vis et chevilles à béton par exemple).

L'assemblage des éléments 1, 26 et 28 est de préférence effectué en usine. La structure de l'ensemble ainsi constitué assure une très faible hétérogénéité transversale, proche de celle du câble 1, ainsi qu'un incidence nulle aussi bien des flexions longitudinales de la couche de surface de la chaussée 3 que des variations de module d'élasticité entre cette dernière et le capteur.

## Revendications

1. Procédé de mesure des charges dynamiques appliquées à une chaussée par le trafic routier, dans lequel on place en travers de la chaussée un premier câble piézo-électrique (1) rectiligne de façon que les roues des essieux des véhicules circulant sur la chaussée (3) le soumettent, lors de leur passage, à une pression à laquelle il répond par l'émission d'une impulsion électrique (I1), et on calcule la charge dynamique (F) correspondante à partir des paramètres de ladite impulsion, tandis que la vitesse (V) du véhicule est mesurée à l'aide de l'impulsion (I2) délivrée par un second câble piézo-électrique (2) rectiligne disposé sur la chaussée à une certaine distance (D) du premier câble (1) précité, par détermination de la durée de l'intervalle de temps (tl-to) séparant l'apparition des impulsions (I1, I2) respectivement fournies par le deux câbles (1, 2) pour une même roue, ce procédé étant caractérisé par le fait que l'on déduit la charge dynamique (F) de l'aire (A) du contour, rapporté au temps, de l'impulsion délivrée par le premier câble (1) et de la vitesse (V) du véhicule, en effectuant le produit de ladite aire par ladite vitesse.

2. Procédé selon la revendication 1, caractérisé par le fait que l'aire (A) de l'impulsion délivrée par le premier câble (1) est mesurée par intégration par rapport au temps du signal (C4) constituant l'impulsion entre l'instant (tl) de son apparition et de l'instant (t3) de sa fin où ce signal reprend la valeur qu'il avait à l'instant d'apparition (tl).

3. Procédé selon la revendication 2, caractérisé par le fait que, lorsque la valeur du dit signal (C4) constituant l'impulsion à l'instant (tl) de son apparition est différente de zéro, l'intégration porte sur la différence entre ce signal et un signal (C7) crée avec une valeur constant (-u) égale à ladite valeur non nulle.

4. Procédé selon l'une quelconque des revendications 1 à 3, caractérisé par le fait que l'instant d'apparition de chaque impulsion (I1, I2) est déterminé par détection de l'instant (to, tl) où le signal (C2) obtenu par dérivation de l'impulsion respective quite la valeur zéro.

5. Procédé selon l'une quelconque des revendications 1 à 4, caractérisé par le fait que la durée de l'intervalle de temps (tl-to) séparant l'apparition des impulsions correspondant à une même roue est mesurée par création d'un signal en forme de rampe (C9) commençant à l'instant (to) d'apparition de l'impulsion émise par le câble sur lequel passe d'abord la roue et finissant à l'instant (tl) d'apparition de l'impulsion émise par l'autre câble, ce dernier étant disposé en aval suivant le sens de circulation des véhicules.

6. Procédé selon l'une quelconque des revendications 1 à 5, caractérisé par le fait que les câbles (1, 2) font entre eux un angle non nul.

7. Procédé selon l'une quelconque des revendications 1 à 5, caractérisé par le fait que les câbles (1, 2) sont disposés parallèlement l'un à l'autre.

8. Procédé selon la revendication 6 ou 7, caractérisé par le fait que l'un au moins des câbles (1, 2) est disposé perpendiculairement à la direction longitudinale de la chaussée.

9. Procédé selon l'une quelconque des revendications 1 à 8, caractérisé par le fait que le premier câble (1) est installé de façon à être insensible aux effets des flexions longitudinales de la chaussée (3).

10. Procédé selon la revendication 9, caractérisé par le fait que ledit câble (1) est noyé dans un matériau (22, 28) à module d'élasticité très peu sensible à la température, remplissant un long support rigide (21, 26) sous-jacent au câble.

11. Procédé selon la revendication 10, caractérisé par le fait que ledit support est un profilé en U (21) dont les ailes, tournées vers le haut, sont flanquées de bandes (25) de matériau à très faible module d'élasticité, le tout étant noyé à l'intérieur d'une saignée (24) pratiquée transversalement dans la couche de surface de la chaussée (3) et remplie d'un matériau (23) à module d'élasticité très peu sensible à la température.

12. Procédé selon la revendication 11, caractérisé par le fait que ledit support est un long boîtier plat (26) placé transversalement sur la couche de surface de la chaussée (3) et fixé à celle-ci.

**Patentansprüche**

1. Verfahren zur Messung der vom Strassenverkehr auf eine Fahrbahn aufgebrachten dynamischen Kräfte, bei dem quer über die Fahrbahn ein erstes piezo-elektrisches Kabel (1) geradlinig derart angeordnet wird, dass die Räder der Achsen der Fahrzeuge, die sich auf der Fahrbahn (3) bewegen, bei ihrer Überfahrt es unter einen Druck setzen, auf den es durch Emission eines elektrischen Impulses (I1) antwortet, und die entsprechende dynamische Kraft (F) ausgehend von Parametern des genannten Impulses berechnet wird, während die Geschwindigkeit (V) des Fahrzeugs mit Hilfe des Impulses (I2) gemessen wird, der durch ein zweites piezo-elektrisches Kabel (2) geliefert wird, das geradlinig auf der Fahrbahn in einem gewissen Abstand (D) des genannten ersten Kabels (1) angeordnet ist, durch Bestimmung der Dauer des Zeitintervalls (t1-t0), das das Erscheinen der Impulse (I1, I2) trennt, die entsprechend durch die beiden Kabel (1, 2) für dasselbe Rad geliefert werden, wobei das Verfahren dadurch gekennzeichnet ist, dass die dynamische Kraft (F) der Umrissfläche (A), bezogen auf die Zeit, von dem durch das erste Kabel (1) gelieferten Impuls und der Geschwindigkeit (V) des Fahrzeugs abgeleitet wird, unter Erzeugung des Produktes der genannten Umrissfläche mit der genannten Geschwindigkeit.

2. Verfahren nach Anspruch 1, dadurch gekennzeichnet, dass die Fläche (A) des Impulses, der durch das erste Kabel (1) geliefert wird, durch Integration bezüglich der Zeit des den Impuls bildenden Signals (C4) zwischen dem Moment (t1) seines Auftauchens und dem Endzeitpunkt (t3), wo dieses Signal den Wert einnimmt, den es bei seinem Erscheinen (t1) hatte, gemessen wird.

3. Verfahren nach Anspruch 2, dadurch gekennzeichnet, dass, wenn der Wert des genannten, den Impuls bildenden Signals (C4) zum Zeitpunkt (t1) seines Erscheinens unterschiedlich von Null ist, die Integration auf der Differenz zwischen diesem Signal und einem Signal (C7) basiert wird, das mit einem konstanten Wert (−u) gebildet wird, der gleich dem genannten Wert ungleich Null ist.

4. Verfahren nach einem der Ansprüche 1 bis 3, dadurch gekennzeichnet, dass der Zeitpunkt des Erscheinens eines jeden Impulses (I1, I2) bestimmt wird durch die Erfassung des Zeitpunkts (t0), t1), wo das Signal (C2), das durch die Ableitung des entsprechenden Impulses erhalten wird, den Wert Null verlässt.

5. Verfahren nach einem der Ansprüche 1 bis 4, dadurch gekennzeichnet, dass die Dauer des Zeitintervalls (t1−t0), das das Auftauchen der Impulse trennt, die einem selben Rad entsprechen, gemessen wird durch die Erzeugung eines Signals in Form einer Rampe (C9), das zum Zeitpunkt (t0) des Auftauchens des Impulses beginnt, der von dem Kabel emittiert wird, über das zunächst das Rad fährt, und zum Zeitpunkt (t1) des Auftauchens des Impulses endet, der von dem anderen Kabel emittiert wird, wobei letzteres unterhalb gemäss der Fahrtrichtung der Fahrzeuge angeordnet ist.

6. Verfahren nach einem der Ansprüche 1 bis 5, dadurch gekennzeichnet, dass die Kabel (1, 2) einen Winkel einschliessen, der ungleich Null ist.

7. Verfahren nach einem der Ansprüche 1 bis 5, dadurch gekennzeichnet, dass die Kabel (1, 2) zueinander parallel angeordnet sind.

8. Verfahren nach Anspruch 6 oder 7, dadurch gekennzeichnet, dass wenigstens eines der Kabel (1, 2) senkrecht zur Längsrichtung der Fahrbahn (3) angeordnet ist.

9. Verfahren nach einem der Ansprüche 1 bis 8, dadurch gekennzeichnet, dass das erste Kabel (1) derart angeordnet ist, dass es nicht auf Längsschwingungseffekte der Fahrbahn (3) reagiert.

10. Verfahren nach Anspruch S, dadurch gekennzeichnet, dass das genannte Kabel (1) in einem Material (22, 28) mit einem Elastizitätsmodul eingebettet ist, der sehr wenig empfindlich auf die Temperatur ist, wobei dieses Material einen langen starren Support (21, 26) unterhalb des Kabels füllt.

11. Verfahren nach Anspruch 10, dadurch gekennzeichnet, dass der Support ein U-Profil (21) aufweist, dessen nach oben gebogene Schenkel von Bändern (25) aus einem sehr schwachen Elastizitätsmodul flankiert sind, wobei das Ganze im Inneren eines Einschnitts (24) eingebettet ist, der quer in der Oberflächenschicht der Fahrbahn (3) ausgebildet ist und mit einem Material (23) gefüllt ist, das einen gegenüber der Temperatur sehr gering empfindlichen Elektrizitätsmodul aufweist.

12. Verfahren nach Anspruch 11, dadurch gekennzeichnet, dass der Support ein langes flaches Gehäuse (26) ist, das quer auf der Oberflächenschicht der Fahrbahn (3) angeordnet und an dieser befestigt ist.

**Claims**

1. A process for measuring the dynamic loads applied to a highway by the road traffic, in which a first rectilinear piezo-electric cable (1) is placed across the highway so that the wheels of the axles of the vehicles circulating on the highway (3) subject it, upon passage thereof, to a pressure to which it responds by the emission of an electrical (I1) and the corresponding dynamic load (F) is calculated from the parameters of said pulse, whilst the speed (V) of the vehicle is measured with the aid of the pulse (I2) delivered by a second rectilinear piezo-electric cable disposed on the highway at a certain distance (D) from said first cable (1), by determination of the duration of the time gap (t1−T0) separating the appearance of the pulses (I1, I2) respectively furnished by the two cables (1, 2) for the same wheel, said process being characterized by the fact that the dynamic load (F) being deduced from the area (A) of the contour, with respect to time, of the pulse delivered by the first cable (1) and from the speed (V) of the vehicle, by making the product of said area by said speed.

2. Process according to claim 1, characterized by the fact that the area (A) of the pulse delivered by the first cable (1) is measured by integration with respect to time of the signal (C4) constituted the pulse between the instant (t1) of its appearance and the instant (t3) of its end when this signal resumes the value which it had at the instant of appearance (t1).

3. Process according to claim 2, characterized by the fact, when the value of said signal (C4) constituting the pulse at the instant (t1) of its appearance is different from zero, the integration is directed to the difference between this signal and a signal (C7) created with a constant value (−u) equal to said non-zero value.

4. Process according to any one of claims 1 to 3, characterized by the fact that the instant of appearance of each pulse (I1, I2) is determined by detecting the instant (t0, t1) when the signal (C2) obtained by derivation of the respective pulse leaves the value zero.

5. Process according to any one of claims 1 to 4, characterized by the fact that the duration of the time gap (t1−t0) separating the appearance of the pulses corresponding to the same wheel is measured by creating a ramp-shaped signal (C9) beginning at the instant (to) of appearance of the pulse emitted by the cable over which the wheel firstly passes and ending at the instant (t1) of appearance of the pulse emitted by the other cable, the latter being disposed downstream in the direction of circulation of the vehicles.

6. Process according to any one of claims 1 to 5, characterized by the fact that the cables (1, 2) make a non-zero angle with each other.

7. Process according to any one of claims 1 to 5, characterized by the fact that the cables (1, 2) are disposed parallel to each other.

8. Process according to claim 6 or 7, characterized by the fact that at least one of the cables (1, 2) is disposed perpendicularly to the longitudinal direction of the highway (3).

9. Process according to any one of claims 1 to 8, characterized by the fact that the first cable (1) is installed so as to be insensitive to the effects of the longitudinal deflections of the highway (3).

10. Process according to claim 9, characterized by the fact that is embedded in a material (22, 28) having a modulus of elasticity practically insensitive to temperature, filling a long rigid support (21, 26) subjacent the cable.

11. Process according to claim 10, characterized by the fact that said support is a U-section (21) of which the upwardly facing flanges are flanked by strips (25) of material with a very low modulus of elasticity, the whole being embedded inside a drain (24) made transversely in the surface layer of the highway (3) and filled with a material (23) with a modulus of elasticity practically insensitive to temperature.

12. Process according to claim 11, characterized by the fact that said support is a long flat box (26) placed transversely on the surface layer of the highway (3) and fixed thereto.

Fig.1

Fig.2

Fig. 3

Fig. 4